# EUROPÄISCHE PATENTSCHRIFT

(11) **EP 1 135 268 B1**
(45) Veröffentlichungstag und Bekanntmachung des Hinweises auf die Patenterteilung: **04.09.2002**
(21) Anmeldenummer: 99966928.6
(22) Anmeldetag: 08.12.1999
(51) Int. Cl.: B60C 23/04

(54) **ANORDNUNG ZUM ÜBERTRAGEN VON SIGNALEN AUS EINER EINRICHTUNG ZUM ÜBERWACHEN DES REIFENDRUCKS AN FAHRZEUGRÄDERN ZU EINEM IM FAHRZEUG ANGEORDNETEN AUSWERTEGERÄT**
ARRANGEMENT FOR TRANSMITTING SIGNALS FROM A DEVICE MONITORING TYRE PRESSURE ON THE WHEELS OF A MOTOR VEHICLE TO AN EVALUATION DEVICE ARRANGED IN A MOTOR VEHICLE
SYSTEME DE TRANSMISSION A UN APPAREIL D'EVALUATION PLACE DANS UN VEHICULE DES SIGNAUX D'UN DISPOSITIF DE SURVEILLANCE DE LA PRESSION DES PNEUS SUR LES ROUES DU VEHICULE

(30) Priorität: 10.12.1998 DE 19856898
(43) Veröffentlichungstag der Anmeldung: 26.09.2001
(73) Patentinhaber: Beru Aktiengesellschaft, 71363 Ludwigsburg (DE)
(72) Erfinder: KESSLER, Ralf, D-76327 Pfinztal (DE); KÜHNLE, Andreas, D-75433 Maulbronn (DE); MICHAL, Roland, A 6890 Lustenau (AT); NORMANN, Norbert, D-75223 Niefern-Öschelbronn (DE); SCHULZE, Gunter, Lothar, D-75228 Ispringen (DE)
(74) Vertreter: Twelmeier, Ulrich, Dipl.Phys.
(86) Internationale Anmeldenummer: EP9909629
(87) Internationale Veröffentlichungsnummer: WO00034061

(56) Entgegenhaltungen:
- EP-A- 0 445 003
- DE-A- 3 029 563
- DE-A- 19 518 806
- DE-A- 19 608 478
- US-A- 5 602 524

## Beschreibung

Die Erfindung geht aus von einer Anordnung mit den im Oberbegriff des Anspruchs 1 angegebenen Merkmalen. Eine solche Anordnung ist aus der DE 195 18 806 A1 bekannt, welche offenbart, den Luftdruck in den Reifen eines Fahrzeugs mittels Drucksensoren zu überwachen, welche zusammen mit einer batteriebetriebenen elektronischen Meß- und Steuerschaltung, mit einem Sender und mit einer Sendeantenne im Ventil, am Ventil oder in Baueinheit mit dem Ventil des Rades vorgesehen sind. Diese am jeweiligen Rad vorgesehene Einrichtung wird nachfolgend auch als Radelektronik bezeichnet. Die von dem Drucksensor in der jeweiligen Radelektronik gelieferten elektrischen Reifendrucksignale werden durch die elektronische Meß- und Steuerschaltung um ein das jeweilige Rad kennzeichnenden Identifikationssignal (Kennung) ergänzt, in digitale Funksignale umgewandelt und über Funk an ein zentrales Empfangs-, Auswerteund Steuergerät übermittelt, welches zu diesem Zweck mit Empfangsantennen verbunden ist. Die Funksignale enthalten als Bestandteile in digitaler Form eine Präambel, die Kennung, ein Reifendrucksignal und eine Postambel. Die Funksignale sind Hochfrequenzsignale. Die Hochfrequenzübertragung erfolgt in Deutschland im 433 MHz-Bereich, dem sogenannten ISM-Band, bzw. in einigen anderen Ländern im 315 MHz-Bereich oder im 868 MHz-Bereich. Die von den Radelektroniken gesendeten Funksignale werden von den vorgesehenen Empfangsantennen empfangen.
Ist jedem Rad des Fahrzeugs eine eigene Empfangsantenne zugeordnet, befindet sich diese vorzugsweise in der Nachbarschaft des jeweiligen Rades, insbesondere an der Wand des Radkastens der Fahrzeugkarosserie. Es ist auch möglich, für die Vorderräder eine gemeinsame erste Antenne und für die Hinterräder eine gemeinsame zweite Antenne vorzusehen, welche vorzugsweise ungefähr in der Mitte zwischen den Rädern angeordnet sind. Die Empfangsantennen übertragen die HF-Signale über spezielle HF-taugliche Leitungen an das zentrale Empfangs-, Auswerte- und Steuergerät, in welchem ein HF-Empfänger, der für jede Antenne einen eigenen Empfangskanal hat, das auf dem Eingang des jeweiligen Empfangskanals ankommende Signal verstärkt und demoduliert. Das nach der Demodulation vorliegende niederfrequente Signal wird dekodiert und ausgewertet, um dem Fahrer über den Steuerteil des Gerätes ggfs. eine Warnung oder eine sonstige Information über den Reifendruck zukommen zu lassen.

Da die Radelektroniken batteriebetrieben sind und die Lebensdauer der Batterie typisch sieben Jahre betragen soll, muß die Radelektronik so stromsparend wie nur möglich arbeiten. Ihre Funksignale sind deshalb sehr schwach. Aufgrund des niedrigen Signalpegels auf den elektrischen Leitungen zwischen den Empfangsantennen und dem zentralen Empfangs-, Auswerte- und Steuergerät bedürfen die elektrischen Leitungen aufwendiger Maßnahmen zum Schutz der auf diesen Leitungen übertragenen Signale gegen externe Störeinflüsse. Bei einem praktisch ausgeführten Reifendruck-Kontrollsystem gemäß der DE 195 18 806 A1 sind die elektrischen Leitungen aufwendig geschirmte twisted-pair-Kabel. Die damit erreichbare Sicherheit gegen Störungen ist unvollkommen und bringt doch erhebliche Kosten mit sich.

Der vorliegenden Erfindung liegt die **Aufgabe** zugrunde, einen Weg anzugeben, wie die Übertragung der Signale in höherem Maße störunempfindlich und dennoch preiswert gestaltet werden kann, ohne die Lebensdauer der Batterie in der Radelektronik zu verkürzen.

Diese Aufgabe wird gelöst durch eine Anordnung mit den im Anspruch 1 angegebenen Merkmalen. Vorteilhafte Weiterbildungen der Erfindung sind Gegenstand der abhängigen Ansprüche.

Erfindungsgemäß ist der HF-Empfänger mit Demodulator nicht mehr am zentralen Auswerte- und Steuergerät angeordnet; statt dessen ist bei jeder Empfangsantenne ein jetzt nur mehr einkanaliger HF-Empfänger mit einem Demodulator angeordnet, so daß die elektrischen Leitungen nur noch NF-Signale anstelle von HF-Signalen übertragen müssen. Die NF-Signale erfordern zu ihrer Übertragung keine aufwendig geschirmten Kabel; es können ungeschirmte elektrische Leitungen verwendet werden, welche sehr viel preiswerter sind. Hinzu kommt der Vorteil, daß die durch Demodulation bereits an der Antenne gebildeten NF-Signale eine wesentlich geringere Störempfindlichkeit zeigen als die über twisted-pair-Kabel übertragenen HF-Signale im Stand der Technik.

Vorzugsweise ist jede einzelne Empfangsantenne mit dem ihr zugeordneten einkanaligen HF-Empfänger mit Demodulator zu einer Baueinheit zusammengefaßt. Das ermöglicht die kürzeste Leitungsverbindung zwischen der Empfangsantenne und dem einkanaligen HF-Empfänger und ist besonders günstig für das Erreichen einer geringen Störempfindlichkeit.

Die einkanaligen HF-Empfänger benötigen eine Spannungsversorgung aus dem elektrischen Bordnetz des Fahrzeugs. Die Spannungsversorgung kann über eine gesonderte Zuleitung vom Bordnetz zum jeweiligen HF-Empfänger erfolgen. Vorzugsweise erfolgt die Spannungsversorgung jedoch nicht über gesonderte Leitungen, sondern über die für die Übertragung der NF-Signale ohnehin vorgesehenen Leitungen von zentralen Auswerte- und Steuergerät aus, welches seinerseits aus dem elektrischen Bordnetz versorgt wird. Da die Versorgungsspannung eine Gleichspannung ist, kann ihr das zu übertragende NF-Signal durch Überlagerung aufgeprägt werden.

Aus der DE 196 08 478 A1 ist es bekannt, daß man durch Auswertung der Intensitäten (Empfangsamplituden) der von den Empfangsantennen empfangenen Funksignale mittels des zentralen Auswerte- und Steuergerätes ermitteln kann, an welcher Stelle des Fahrzeuges sich ein Rad befindet, dessen Radelektronik ein Signal mit einer individuellen Kennung aussendet. Wenn die selbsttätige Ermittlung der Radposition auch mit einer erfindungsgemäßen Anordnung möglich sein soll, dann muß dem zentralen Auswerte- und Steuergerät zusätzlich zu dem über Funk empfangenen und dann demodulierten Signal auch noch eine Information über die Intensität des von der jeweiligen Empfangsantenne empfangenen Signals, z.B. eine Information über die empfangene Signalfeldstärke, mit übertragen werden. Diese Information wird in der Fachsprache auch mit der Abkürzung RSSI bezeichnet (Received Signal Strength Indicator = Maß für die Empfangsfeldstärke). Um dieses zu ermöglichen, gibt es verschiedene Möglichkeiten:

Im einkanaligen HF-Empfänger kann ein analoges Signal erzeugt werden, dessen Stärke proportional zum RSSI-Pegel des über Funk empfangenen Signals ist. Das analoge Signal kann z.B. dadurch erzeugt werden, daß das empfangene Signal verzweigt und ein Zweig mittels eines Kondensators integriert wird. Die sich am Kondensator aufbauende Spannung ist dann ein Maß für den empfangenen RSSI-Pegel.

Das analoge Signal kann als Gleichspannung oder als eingeprägter Gleichstrom über eine gesonderte Leitung zum zentralen Auswerte- und Steuergerät übertragen werden. Vorzugsweise wird das analoge Signal über dieselbe elektrische Leitung übertragen, über welche auch das demodulierte NF-Signal übertragen wird. Wenn über diese Leitung darüberhinaus noch die Spannungsversorgung des einkanaligen HF-Empfängers erfolgen soll, dann kann man die RSSI-Information nicht als Gleichspannung übertragen, denn die ist in diesem Fall bereits als Versorgungsspannung vom Auswerte- und Steuergerät festgelegt; wohl aber kann die RSSI-Information in diesem Fall als Stromsignal über die gemeinsam genutze einzige Leitung vom Empfänger-Demodulator zum zentralen Auswerte- und Steuergerät übertragen werden, in welchem die NF-Signale und das RSSI-Signal wieder getrennt ausgewertet werden können.

Andererseits ist es möglich, den einkanaligen HF-Empfänger so auszubilden, daß er den RSSI-Pegel der über Funk empfangenen Signale vor Ort auswertet, den RSSI-Pegel in ein digitales Signal wandelt und dieses digitale RSSI-Signal zusammen mit dem über Funk empfangenen und dann demodulierten, digitalen Empfangssignal zum zentralen Auswerte- und Steuergerät überträgt. Die Übertragung des digitalen RSSI-Signals kann vor oder nach dem demodulierten digitalen Empfangssignal erfolgen.

Ein weiterer Vorteil der Erfindung besteht darin, daß die aus dem einkanaligen HF-Empfänger und dem Demodulator gebildete Baugruppe so ausgebildet werden kann, daß sie an einer Schnittstelle das Datenprotokoll eines in dem Fahrzeug installierten BUS-Systems erzeugt. Die Verknüpfung der aus den Empfangsantennen, HF-Empfängern und Demodulatoren gebildeten Baueinheiten mit dem zentralen Auswerte- und Steuergerät kann dann durch das vorhandene BUS-System erfolgen. Infolge der erfindungsgemäßen Kombination mit einem HF-Empfänger und Demodulator wird die jeweilige Empfangsantenne ein BUS-fähiger, intelligenter HF-Sensor. Das zentrale Auswerte- und Steuergerät kann seine Reifendruck-Informationen direkt über eine bereits vorhandene BUS-Schnittstelle erhalten und seine Ausgangssignale (Anzeige-, Diagnose- und Steuersignale) ebenfalls über eine BUS-Schnittstelle abgeben. Über das BUS-System kann auch die Spannungsversorgung des HF-Empfängers erfolgen. Eine vom BUS-System gesonderte, eigene Verbindung zwischen den Empfangsantennen und dem zentralen Auswerte- und Steuergerät ist bei dieser Weiterbildung der Erfindung überflüssig.

Ausführungsbeispiele der Erfindung sind schematisch in den beigefügten Zeichnungen dargestellt. Gleiche oder einander entsprechende Teile sind in den Ausführungsbeispielen mit übereinstimmenden Bezugszahlen bezeichnet.
- Figur 1: zeigt schematisch in einer Blockdarstellung die Anordnung der wesentlichen Bestandteile eines Reifendrucküberwachungssystems in einem Automobil, und
- Figur 2: zeigt eine gegenüber der Figur 1 abgewandelte Art der Verbindung der Bestandteile des Reifendrucküberwachungssystems, nämlich unter Nutzung eines im Automobil installierten BUS-Systems.

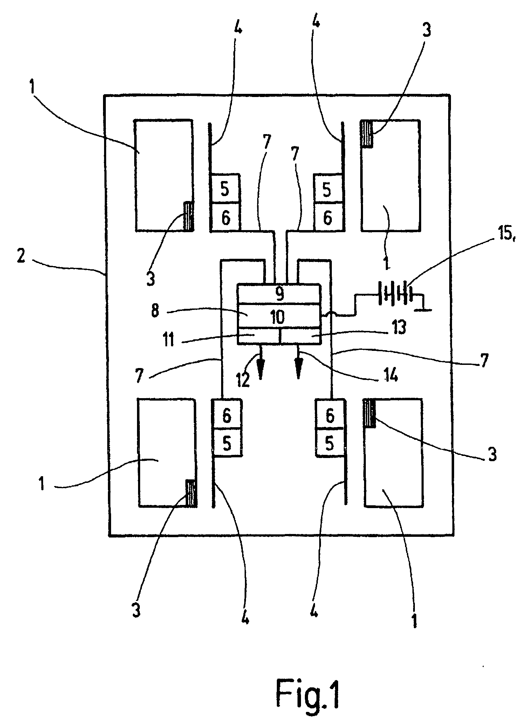

Figur 1 zeigt schematisch vier Räder 1 eines Automobils 2. An jedem Rad 1 ist eine Radelektronik 3 angebracht. Jede Radelektronik 3 ist in Baueinheit mit einem Ventil verwirklicht und befindet sich am Ventilfuß im Inneren des Luftreifens des Rades. Die Radelektroniken 3 sind untereinander gleich und haben in Bezug auf das jeweilige Rad 1 eine übereinstimmende Einbaulagen. Jede Radelektronik 3 enthält (nicht dargestellt) eine elektrische Batterie, einen integrierten, vorzugsweise piezo-elektrisch arbeitenden Drucksensor zugehöriger mit Meß- und Steuerelektronik sowie einen Sender mit HF-Stufe, welche eine Sendeantenne speist. Der Sender sendet vom Drucksensor gewonnene und von der Meß- und Steuerelektronik verarbeitete Drucksignale in Gestalt von digitalen HF-Signalen aus, welche darüberhinaus eine die Radelektronik charakterisierende Kennung enthalten.

Jedem Rad 1 benachbart ist in dem ihn umgebenden Radkasten der Karosserie 2 des Automobils eine Empfangsantenne 4 vorgesehen. Jeder Empfangsantenne 4 ist ein einkanaliger HF-Empfänger 5 mit Demodulator 6 zugeordnet, und zwar bilden die jeweilige Empfangsantenne 4, der HF-Empfänger 5 und der Demodulator 6 eine Baueinheit, welche durch eine elektrische Leitung 7 mit einem zentralen Auswerte- und Steuergerät 8 verbunden ist, welches sich z.B. hinter einem Armaturenbrett des Automobils 1 befinden kann.

Das Auswerte- und Steuergerät 8 enthält einen NF-Empfangsteil 9, einen Mikroprozessor 10 für die Signalauswertung und für die Steuerungsaufgaben, einen BUS-Treiber 11 für eine BUS-Schnittstelle 12, über welche Warnsignale und andere Informationen über den Reifendruck über einen fahrzeugspezifischen Datenbus am Armaturenbrett zur Anzeige gebracht sowie Signale für die Bedienung und Einstellung des Auswerte- und Steuergerätes übermittelt werden können, sowie einen Treiber 13 für eine Diagnoseschnittstelle 14. Die Spannungsversorgung des Auswerte- und Steuergerätes 8 erfolgt aus dem Bordnetz, symbolisch dargestellt durch Verbindung des Auswerte- und Steuergerätes 8 mit einer Batterie 15 des Automobils. Die Spannungsversorgung der einkanaligen HF-Empfänger 5 mit den zugehörigen Demodulatoren 6 erfolgt über das Auswerte- und Steuergerät 8 und über die für die Übertragung der NF-Signale ohnehin vorgesehenen Leitungen 7.

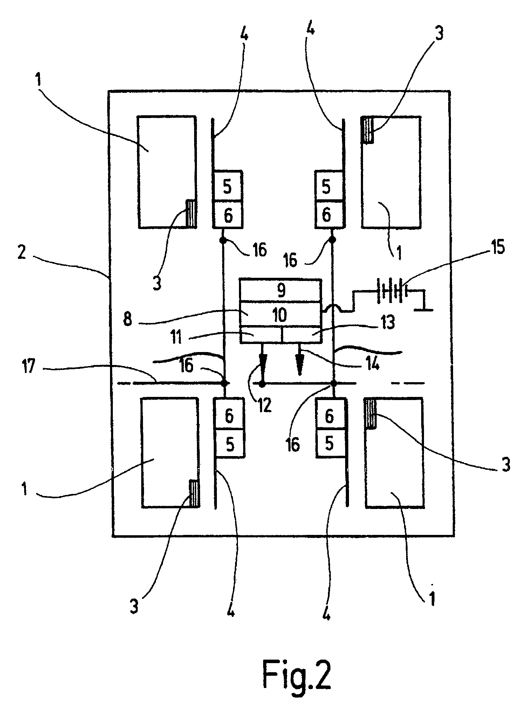

Das in Figur 2 dargestellte Ausführungsbeispiel unterscheidet sich von dem in Figur 1 dargestellten Ausführungsbeispiel darin, daß die aus einem einkanaligen HF-Emfänger 5 und Modulator 6 gebildeten Baugruppen an ihrer Ausgangsschnittstelle 16 direkt das Datenprotokoll eines im Automobil installierten BUS-Systems erzeugen. Das Auswerte- und Steuergerät 8 erhält dann seine Informationen direkt über die bereits vorhandene BUS-Schnittstelle 12. Eine gesonderte Verbindung zwischen den Empfangsantennen 4 und dem Auswerte- und Steuergerät 8 ist überflüssig.

### Bezugszahlenliste

- 1.: Räder
- 2.: Automobil
- 3.: Radelektronik
- 4.: Empfangsantenne
- 5.: HF-Empfänger
- 6.: Demodulator
- 7.: elektrische Leitung
- 8.: Auswerte- und Steuergerät
- 9.: NF-Empfangsteil
- 10.: Mikroprozessor
- 11.: BUS-Treiber
- 12.: BUS-Schnittstelle
- 13.: Treiber
- 14.: Diagnoseschnittstelle
- 15.: Batterie
- 16.: Ausgangsschnittstelle
- 17.: BUS-System

## Patentansprüche

1. Anordnung zum Übertragen von Signalen aus einer Einrichtung (3) zum Überwachen des Drucks in Luftreifen von Fahrzeugrädem (1), welche im Luftreifen vorzugsweise in Baueinheit mit einem Ventil angeordnet ist und
einen Drucksensor, welcher den Druck im Luftreifen mißt und ein elektrisches Druckmeßsignal erzeugt,
eine Steuerschaltung,
eine Batterie als Stromquelle
und einen Sender mit Sendeantenne enthält, welcher von der Steuerschaltung gesteuert das Druckmeßsignal in Form eines Hochfrequenzsignals aussendet,
zu einem im Fahrzeug (2) angeordneten zentralen Auswerte- und Steuergerät (8), welches über elektrische Leitungen (7) mit Empfangsantennen (4) verbunden ist, welche einzelne Räder (1) oder Gruppen von Rädern (1) des Fahrzeuges (2) zugeordnet sind,
**dadurch gekennzeichnet, daß** bei jeder Empfangsantenne (4) ein einkanaliger HF-Empfänger (5) mit Demodulator (6) angeordnet ist, so daß die elektrischen Leitungen (7) NF-Signale anstelle von HF-Signalen übertragen.

2. Anordnung nach Anspruch 1, **dadurch gekennzeichnet, daß** die elektrischen Leitungen (7) ungeschirmt sind.

3. Anordnung nach Anspruch 1 oder 2, **dadurch gekennzeichnet, daß** jede Empfangsantenne (4) und der ihr zugeordnete einkanalige HF-Empfänger (5) mit Demodulator (6) zu einer Baueinheit zusammengefaßt sind.

4. Anordnung nach einem der vorstehenden Ansprüche, **dadurch gekennzeichnet, daß** die einkanaligen HF-Empfänger (5) von dem zentralen Auswerteund Steuergerät (8) über die der Übertragung der NF-Signale dienenden elektrischen Leitungen (7) mit der zu ihrem Betrieb erforderlichen elektrischen Spannung versorgt werden.

5. Anordnung nach einem der vorstehenden Ansprüche, **dadurch gekennzeichnet, daß** der einkanalige HF-Empfänger (5) so ausgebildet ist, daß er ein analoges Signal erzeugt, dessen Stärke proportional zum empfangenen RSSI-Pegel ist.

6. Anordnung nach Anspruch 5, **dadurch gekennzeichnet, daß** das analoge Signal eine Gleichspannung ist.

7. Anordnung nach Anspruch 5, **dadurch gekennzeichnet, daß** das analoge Signal ein eingeprägter Gleichstrom ist.

8. Anordnung nach Anspruch 6 oder 7, **dadurch gekennzeichnet, daß** das analoge Signal über eine gesonderte Leitung zum zentralen Auswerte- und Steuergerät (8) übertragen wird.

9. Anordnung nach Anspruch 6 oder 7, **dadurch gekennzeichnet, daß** das analoge Signal über dieselbe Leitung (7) zum zentralen Auswerte- und Steuergerät (8) übertragen wird, über welche auch die NF-Signale übertragen werden.

10. Anordnung nach einem der Ansprüche 1 bis 4, **dadurch gekennzeichnet, daß** der einkanalige HF-Empfänger (5) so ausgebildet ist, daß er ein digitales Signal erzeugt, dessen Stärke proportional zum empfangenen RSSI-Pegel ist, und daß er dieses digitale RSSI-Signal zusammen mit dem demodulierten, digitalen Empfangssignal, welches die Information über den Reifendruck enthält, über die betreffende elektrische Leitung (7) an das zentrale Auswerteund Steuergerät (8) überträgt.

11. Anordnung nach einem der vorstehenden Ansprüche, **dadurch gekennzeichnet, daß** die aus dem einkanaligen HF-Empfänger (5) und dem Demodulator (6) gebildete Baugruppe so ausgebildet ist, daß sie an ihrer Ausgangsschnittstelle (16) das Datenprotokoll eines in dem Fahrzeug installierten BUS-Systems (17) erzeugen kann, welches die demodulierten Signale zum zentralen Auswerte- und Auswertegerät (8) überträgt.

## Claims

1. An arrangement for transmitting signals from a device (3) monitoring tyre pressure on the wheels (1) of a motor vehicle, being arranged in the tyre preferably as one module together with a valve, and comprising
a pressure sensor arranged for measuring the tyre pressure and generating an electric pressure signal,
a control circuit,
a battery as power source, and
a transmitter with a sending antenna for transmitting the measured pressure signal as radio-frequency signal under the control of the control circuit
to a central evaluation and control unit (8), which is arranged in the vehicle (2) and which is connected to receiving antennas (4), to which individual wheels (1) or groups of wheels (1) of the vehicle (2) are allocated,
**characterised in that** there is arranged, near each receiving antenna (4), a single-channel RF receiver (5) with demodulator (6) so that the electric lines (7) send out LF signals instead of RF signals.

2. The arrangement as defined in Claim 1, **characterised in that** the electric lines (7) are unshielded.

3. The arrangement as defined in Claim 1 or Claim 2, **characterised in that** each receiving antenna (4) and the allocated single-channel RF receiver (5) with demodulator (6) are combined in one module.

4. The arrangement as defined in one of the preceding Claims, **characterised in that** the single-channel RF frequency receivers (5) are supplied with the necessary voltage required for their operation from the central evaluation and control unit (8) via the electric lines (7) that serve to transmit the LF signals.

5. The arrangement as defined in one of the preceding Claims, **characterised in that** the single-channel RF receiver (5) is designed to generate an analog signal of a strength proportional to the RSSI level received.

6. The arrangement as defined in Claim 5, **characterised in that** the analog signal is a direct voltage.

7. The arrangement as defined in Claim 5, **characterised in that** the analog signal is a load-independent direct voltage.

8. The arrangement as defined in Claim 6 or Claim 7, **characterised in that** the analog signal is transmitted to the central evaluation and control unit (8) via a separate line.

9. The arrangement as defined in Claim 6 or Claim 7, **characterised in that** the analog signal is transmitted to the central evaluation and control unit (8) via the same line (7) through which the LF signals are transmitted as well.

10. The arrangement as defined in one of Claims 1 to 4, **characterised in that** the single-channel RF receiver (5) is designed to generate a digital signal of a strength proportional to the RSSI level received and that the RF receiver (5) transmits said digital RSSI signal together with the demodulated digital signal received, containing the tyre-pressure information, to the central evaluation and control unit (8) via the respective electric line (7).

11. The arrangement as defined in one of the preceding Claims, **characterised in that** the module comprising the single-channel RF receiver (5) and the demodulator (6) is suitably designed to generate at its output interface (16) the data protocol of a BUS system (17) installed in the vehicle which transmits the demodulated signals to the central evaluation and control unit (8).

## Revendications

1. Agencement pour la transmission de signaux à partir d'un mécanisme (3) pour la surveillance de la pression régnant dans des bandages pneumatiques de roues de véhicules automobiles (1), qui est disposé dans le bandage pneumatique, de préférence en une seule pièce avec une valve, et qui contient un capteur de pression qui mesure la pression régnant dans le bandage pneumatique et qui envoie un signal électrique de la mesure de la pression,
un circuit de commande,
une batterie comme source de courant
et un émetteur comprenant une antenne émettrice qui, sous l'impulsion du circuit de commande, émet le signal de mesure de la pression sous la forme d'un signal haute fréquence, à un appareil central d'évaluation et de commande (8) qui est disposé dans le véhicule (2) et qui est relié via des conducteurs électriques (7) à des antennes de réception (4) qui sont attribuées à des roues individuelles (1) ou à des groupes de roues (1) du véhicule automobile (2), **caractérisé en ce que**, à chaque antenne de réception (4), est disposé un récepteur haute fréquence (5) à un seul canal muni d'un démodulateur (6) de telle sorte que les conducteurs électriques (7) transmettent des signaux basse fréquence à la place de signaux haute fréquence.

2. Agencement selon la revendication 1, **caractérisé en ce que** les conducteurs électriques (7) sont exempts d'isolant.

3. Agencement selon la revendication 1 ou 2, **caractérisé en ce que** chaque antenne de réception (4) et le récepteur haute fréquence (5) à un seul canal équipé d'un démodulateur, attribué à la première citée, forment un module.

4. Agencement selon l'une quelconque des revendications précédentes, **caractérisé en ce que** le récepteur haute fréquence (5) à un seul canal est alimenté avec la tension électrique requise pour son fonctionnement par l'appareil central d'évaluation et de commande (8) via les conducteurs électriques (7) servant à la transmission des signaux basse fréquence.

5. Agencement selon l'une quelconque des revendications précédentes, **caractérisé en ce que** le récepteur haute fréquence (5) à un seul canal est réalisé de telle sorte qu'il génère un signal analogique dont l'intensité est proportionnelle au niveau RSSI reçu.

6. Agencement selon la revendication 5, **caractérisé en ce que** le signal analogique est une tension continue.

7. Agencement selon la revendication 5, **caractérisé en ce que** le signal analogique est un courant continu imposé.

8. Agencement selon la revendication 6 ou 7, **caractérisé en ce que** le signal analogique est transmis via un conducteur séparé à l'appareil central d'évaluation et de commande (8).

9. Agencement selon la revendication 6 ou 7, **caractérisé en ce que** le signal analogique est transmis à l'appareil central d'évaluation et de commande (8) via le même conducteur (7) que celui utilisé pour la transmission des signaux basse fréquence.

10. Agencement selon l'une quelconque des revendications 1 à 4, **caractérisé en ce que** le récepteur haute fréquence (5) à un seul canal est réalisé de telle sorte qu'il génère un signal numérique dont l'intensité est proportionnelle au niveau RSSI reçu et **en ce qu'**il transmet ce signal RSSI numérique de manière conjointe avec le signal de réception numérique soumis à une démodulation, qui contient des informations concernant la pression du bandage pneumatique, via le conducteur électrique correspondant (7) à l'appareil central d'évaluation et de commande (8).

11. Agencement selon l'une quelconque des revendications précédentes, **caractérisé en ce que** le sous-ensemble formé par le récepteur haute fréquence (5) à un seul canal et par le démodulateur (6) est réalisé de telle sorte que son interface de sortie (16) est en mesure de générer le protocole de données d'un système à bus (17) monté dans le véhicule, qui transmet les signaux démodulés à l'appareil central d'évaluation et de commande (8).
